# EUROPEAN PATENT APPLICATION

(11) **EP 3 309 677 A1**
(43) Date of publication of application: **18.04.2018**
(21) Application number: 16306343.1
(22) Date of filing: 12.10.2016
(51) Int. Cl.: G06F 9/445, G06F 21/53

(54) **A PROCESSING DEVICE ADAPTED TO COOPERATE WITH A SECURE ENCLAVE FOR EXECUTING A PROGRAM**

(71) Applicant: GEMALTO SA, 92190 Meudon (FR)
(72) Inventor: DELSUC, Julien, 92190 MEUDON (FR); COGNIAUX, Geoffroy, 92190 MEUDON (FR)
(74) Representative: Delaval, Guillaume Laurent

(57) **Abstract**

This invention related to a processing device (100) adapted to cooperate with a secure enclave (101) for executing a program, the processing device (100) being configured to: receive (110) a message comprising input data; generate from these input data a first execution context (103), an execution context corresponding to a data structure (103) comprising at least data required for executing a task corresponding to a portion of the program, the first execution context (103) being memorized into a memory managed by the processing device (100); send a notification message (120) to the secure enclave (101) indicating that the first execution context (103) is available so that the secure enclave (101) is triggered to read the first execution context (103), to download (130) in its internal memory data of the first execution context (103) that is required for executing the associated task and to execute (131) said task.

## Description

### TECHNICAL FIELD

The present invention relates to a processing device adapted to cooperate with a secure enclave for executing a program and is applicable to the technical domain of secured embedded systems.

### BACKGROUND OF THE INVENTION

One way to increase the security of a processing system is to process sensible data inside a secure enclosure. Implementing a secure enclosure can be very hard.

One solution is to prevent the processing system from being open, or moved, which makes it very limited. Such a system cannot evolve and is very binding for the user.

Another solution is based on the use of a secure element which is a tamper resistant processor. However, secure elements generally have several constraints. In particular, those have little memory, little processing power and a limited input/output interface (I/O). For those reasons, a secure element is rarely used to perform applicative processing, in particular when a big amount of data is involved.

Therefore, one problem that needs to be resolved is to find a technology allowing to perform heavy applicative processing on secure elements.

### SUMMARY OF THE INVENTION

The invention relates to a processing device adapted to cooperate with a secure enclave for executing a program, the processing device being configured to:
- receive a message comprising input data;
- generate from these input data a first execution context, an execution context corresponding to a data structure comprising at least data required for executing a task corresponding to a portion of the program, the first execution context being memorized into a memory managed by the processing device;
- send a notification message to the secure enclave indicating that the first execution context is available so that the secure enclave is triggered to read the first execution context, to download in its internal memory data of the first execution context that is required for executing the associated task and to execute said task.

According to one example, the processing device is configured to receive from the secure enclave a second execution context comprising at least a result produced by the execution on the task for memorizing it into the memory managed by said processing device.

According to one example, a software code or an executable file required for executing the task is memorized enciphered in a memory managed by the processing device, the software code or the executable file required for executing the task being provided by the processing device to the secure enclave at the time of executing said task.

According to one example, the memory managed by the processing device is a virtual memory operated by a memory management unit.

According to one example, the first execution context is placed in a queue comprising a plurality of execution contexts in order to prioritize the generation of the notification messages.

According to one example, the processing device is configured to cooperate with a secure enclave which is a secure element.

According to one example, the processing device is configured to cooperate with a secure enclave which is a trusted execution environment.

According to one example, the processing device is adapted to receive from the secure enclave and memorize in a virtual memory page an execution context generated by the execution of a task.

According to one example, the program to be executed is written in a bytecode split into a plurality of portion of said bytecode, a portion corresponding to a task executable by a virtual machine (VM) implemented by the secure enclave.

The invention also relates to a secure enclave adapted to cooperate with a processing device as described above, configured to:
- receive a notification message from the processing device indicating that a first execution context is available, an execution context corresponding to an aggregation of data items that is required to execute a portion of the program called task;
- read the new execution context and download n a memory internal to the secure enclave from a memory managed by the processing device data contained in the first execution context that is required for executing its associated task;
- execute said task in order to generate a set of at least one result that is used to generate or update a second execution context;
- send the at least one result to the processing device for it to be memorized in the memory managed by the processing device in the form of a second execution context;
- clear the internal memory of the secure enclave by removing data from the first execution context.

According to one example, data contained in the first execution context is memorized in an enciphered form in the memory managed by the processing device, said data being deciphered by the secure enclave before memorizing it in its internal memory using a first ciphering key that is stored in the secure enclave.

According to one example, the secure enclave is configured to encipher data contained in the second execution context before sending it to the processing device using a second ciphering memorized in a memory internal to the secure enclave.

According to one example, at least one of the first and second ciphering keys is a ciphering key enabling symmetric encryption.

According to one example, at least one of the first and second ciphering key is a private key of a key pair comprising a private and a public key enabling ciphering key enabling public-key encryption.

According to one example, the secure enclave is a secure element.

According to one example, the secure enclave is a trusted execution environment.

### BRIEF DESCRIPTION OF THE DRAWINGS

Additional features and advantages of the invention will be more clearly understandable after reading a detailed description of one preferred embodiment of the invention, given as an indicative and non-limitative example, in conjunction with the following drawings:
- Figure 1 is a functional representation of a processing system according to the invention;
- Figure 2 is a schematic representation of a processing system comprising a host device and a secure element cooperating for executing a program;
- Figure 3 is a schematic representation of a processing system comprising a host device and two secure elements cooperating for executing a program.
- Figure 4 provides an example of hierarchical organization that can be implemented for linking different types of execution contexts.

### DETAILED DESCRIPTION

Throughout the figures, the same reference numerals and characters, unless otherwise stated, are used to denote like features, elements, components or portions of the illustrated embodiments. Moreover, while the subject invention will now be described in detail with reference to the figures, it is done so in connection with the illustrative embodiments.

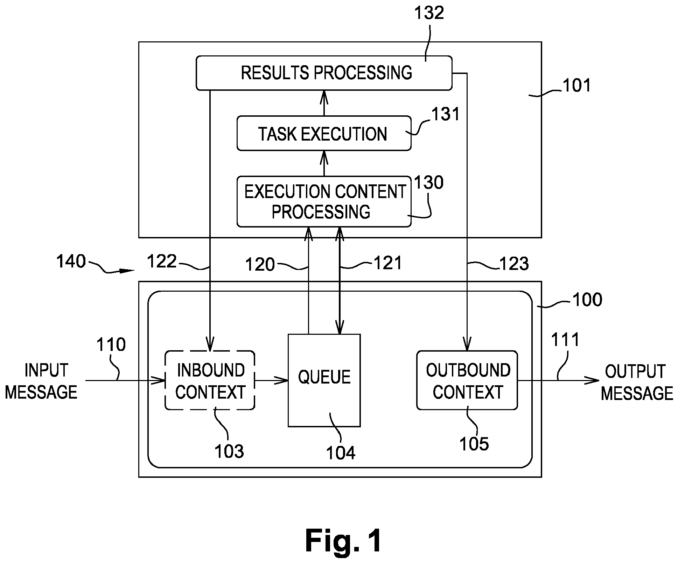

**Figure 1** is a functional representation of a processing system according to the invention.

The processing system 140 comprises a host device 100 and a secure element 101 that are able to communicate through an interface. This interface can be implemented using different technologies belonging to the state of the art. For example, this interface can be implemented using a serial or a parallel bus.

Secure elements are small devices comprising a memory, a microprocessor and an operating system for computing treatments. Such secure elements may comprise a plurality of memories of different types. They are called "secure" because they are able to control the access to the data they contain and to authorize or not the use of data by other machines. The secure elements may also provide computation services based on cryptographic components. In general, secure elements have limited computing resources. Secure elements may be removable or fixed to a host device. Smart cards are portable secure elements.

The secure elements may embed an object-oriented virtual machine in order to be able to run applications written in an object-oriented language. Usually, these object-oriented applications manage applicative data which are stored into the secure element. For instance, the virtual machine and applets can be compliant with Javacard (R) specifications. The virtual machine manages both the administration and the interpretation/execution of the applications. The administration corresponds to the loading, the creation/instantiation, the upgrading and the removing of application.

The host device 100 is a processing device, for example a general purpose processor. The host device comprises for example a memory management unit (MMU) allowing to manage a virtual memory. More precisely, the memory management unit maps virtual memory addresses onto physical memory addresses.

The physical memory addresses correspond to physical memory areas located in the host device 100 and/or externally to the host device 100.

The skilled person can easily appreciate that those physical memory areas can be implemented onto Electrically-Erasable Programmable Read-Only Memory (EEPROM), synchronous dynamic random-access memory (SDRAM) or other type of well know hardware memories.

The host device 100 also comprises at least one input/output interface allowing to receive and send data for the outside of the processing system. This means that the host device 100 is capable of receiving data extracted from input messages 110 and sending data outside of the processing system using outbound messages 111.

One aim of this processing system is to create a symbiosis between the host device 100 and the secure element 101. The secure element 100 takes advantage of the memory managed by the host device and of its inputs/outputs. For that purpose, a generic dedicated application 102 called co-worker and running on the host device 100 can be implemented.

The host device 100 is able to listen the input messages and to provide output messages to the outside world using its input/ouput interface. These messages are associated to an execution context. For example, when an input message is received 110, an inbound context 103 is created. This inbound context stores all or part of the received message.

An inbound context is a particular type of execution context. An execution context corresponds to an aggregation of data that is managed by the processing system and associated to a given task. A task is a portion of program executed by the processing system. By using execution contexts, the processing system is able to split a complicated program potentially requiring important resources in term of memory or processing power into a plurality of tasks that are lighter to execute. The host device controls the execution of the various tasks by the secure element. For example, it collects input data and execution parameter required by a given task for it to be correctly executed.

The inbound context 103 can then be positioned in a queue 104 of execution contexts. This queue can be of first-in first-out type (FIFO). Alternatively, the execution contexts can be associated to data such as but not limited to a priority level or an execution label and sorted as a function of this data.

An execution context is stored in one or several virtual memory pages that are managed for example by the memory management unit (not represented) of the host device 100.

According to another aspect of the invention, an already existing execution context can be reused, modified or completed using data contained in the received message 110.

Once an inbound context has been created and placed in queue 104.Then, a notification message 120 is transmitted to the secure element 101. According to an embodiment of the invention, the notification message 120 is used to trigger the execution of the task associated to the execution context using its data.

Upon reception of this notification 120, the secure element 101 processes 130 the execution context. In other words, it reads 121 the execution context and downloads in its cache memory the portion of data contained in the execution context that is required for the task execution. According to one aspect of the invention, the co-worker can act as a memory management unit (MMU) providing the service of solving virtual memory addresses into physical memory addresses to the secure enclave 101.

As already underlined, a task associated to a given execution context corresponds for example to a portion of a program. According to one aspect of the invention, if the program is a bytecode to be executed by a virtual machine (VM), this a program can be split into several portions of bytecode such that each of these portions is executable by the secure element 101 while it would not have been possible to execute the whole program because of the limited resources of the secure element. Once the execution context is processed, the task to which it is associated is executed 131. The software code or the executable file required for executing the task can be already stored in the secure element. Alternatively, the software code or the executable file required for executing the task can be memorized into one or several virtual memory pages managed by the host device 100 and downloaded into the memory at the time of executing the task.

Data items are then generated as a result of the task's execution. The results are then transmitted to the host device 100. These transmitted results can be used by the host device to update an already existing execution context or to create a new execution context. For example the generated results are transmitted 122 and then used to modify an inbound context 103.

When the task execution is completed, the memory of the secure element 101 occupied by the input data required for the task's execution and/or the memory occupied by the code or executable file associated to the task can be released and therefore used for executing other tasks when required.

According to another aspect of the invention, the generated results are transmitted 123 to the host device 101 as an output of the processing system 140. In that case, the host device 100 generates an execution context called outbound context 105 that can be then formatted into an output message. The output message can be then provided 111 to the outside of the processing system 140.

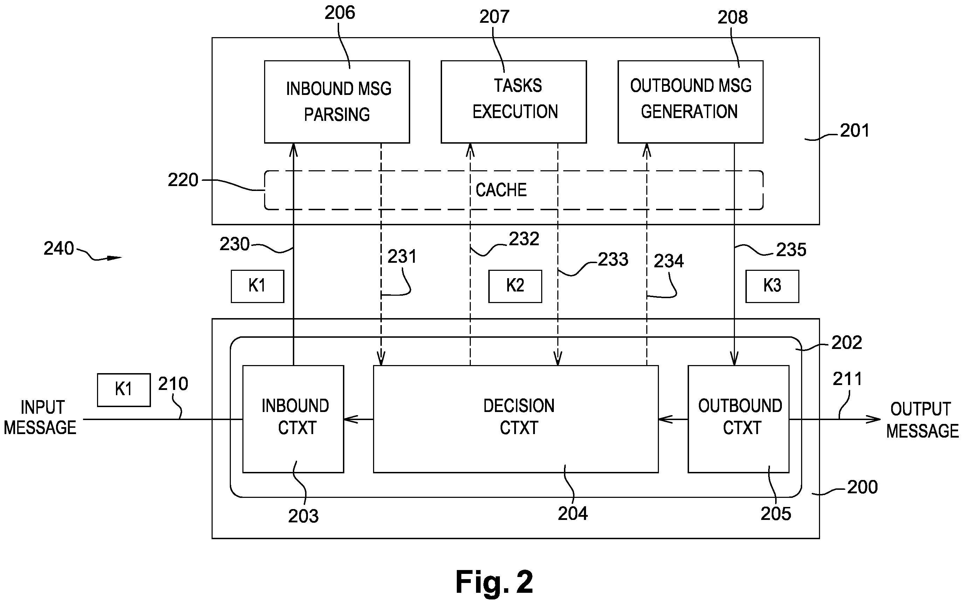

**Figure 2** is a schematic representation of a processing system comprising a host device and a secure element cooperating for executing a program.

According to this example, a host device 200 and a secure element 201 are configured to communicate through a communication interface.

The host device 200 also comprises an input/output interface allowing to receive and send data for the outside of the processing system. This means that the host device 200 is capable of extracting data from input messages 210, generating output data and sending said output data outside of the processing system in the for of output messages 211.

In a secure processing system, it is crucial to protect data exchanges between devices 200, 201 against malicious attacks. According to this example, the secure element 201 comprises three functional modules. A first module 206 is responsible of managing the inbound contexts 203. An inbound context is generated when the host device 200 receives 210 an input message from the outside of the system 240. Data contained in the input message are extracted by the host device 200. In this example, these data are received enciphered and can be deciphered using K1. In this description, K1 which refers either to a symmetric key used for symmetric-key encryption or to a key pair comprising a private key Prk1 used for decryption and a public key Puk1 used for encryption. In that case Prk1 is kept secret by the secure element 201.

The skilled person will understand that several different symmetric keys (or key pairs) can be used at the time of deciphering the received data contained in a given input message. For example, data of a given input message that are associated to different protocol layers may be enciphered using a symmetric key (or key pair) that is specific to each layer.

The inbound context 203 is then transferred 230 to the host device 201 and processed by the functional module 206 of the secure element 201. For example, data contained in the inbound context are deciphered using K1 and parsed in order to generate one or several execution contexts designated as decision contexts 204. These execution contexts are then enciphered using K2 which refers either to a symmetric key used for symmetric-key encryption or to a key pair comprising a private key Prk2 used for decryption and a public key Puk2 used for encryption. In that case, Prk2 is kept secret by the secure element 201.

A single or a plurality of decision contexts can be generated from an inbound context and transmitted 231 to the host device's virtual memory. Alternatively, an already existing decision context can be updated taking into account data carried by the inbound context 203.

At the time of executing a task that is associated to a decision context, the host device 200 sends a notification to the secure element 201. The notified decision context is read by the secure element 201, data required to execute its associated task is downloaded 232, deciphered using K2 and stored in clear in the secure element's cache memory 220. According to an aspect of the invention, the code to be executed by the secure element 201 and corresponding to the task to be executed is retrieved by the secure element 201. This code can be memorized in the virtual memory that is managed by the host device 200. As an example, the code is memorized enciphered using K2. This code is for example a Java (trademark) bytecode executable by a virtual machine implemented by the secure element 201.

Once the required data and code are available in the secure element's memory 220, the task associated to the decision context can be executed. This task execution can lead to the generation of one or several data items. Those data items are the results of the task execution and those can be memorized 233 in a newly generated decision context that is enciphered by K2 or in an updated decision context pre-existing before the execution.

Once the results are generated and provided into a given decision context, a notification is sent 234 to the secure element 200. This notification 234 triggers the execution of a task 208 that is responsible of generating an outbound context 205. As an example, this task corresponds to the transcoding of a decision context enciphered with K2 to an execution context called outbound context 205 which is then re-ciphered using K3 for sending the results outside of the processing system. As for K1 and K2, K3 refers either to a symmetric key used for symmetric-key encryption or to a key pair comprising a private key Prk3 used for decryption and a public key Puk3 used for encryption, Prk3 being in that case kept secret by the secure element 201. The outbound context 205 is transmitted 235 to the host device 200 for storing it in memory, for example in one or more virtual memory page. Then, the outbound context is formatted into an output message 111 and transmitted at the output of the processing system.

Using ciphering keys or key pairs such as K1 and K3 is particularly efficient when the processing device is connected to one or several devices via a communication network. In that case, K1 and K3 can be imposed by the network to secure communications with the outside world.

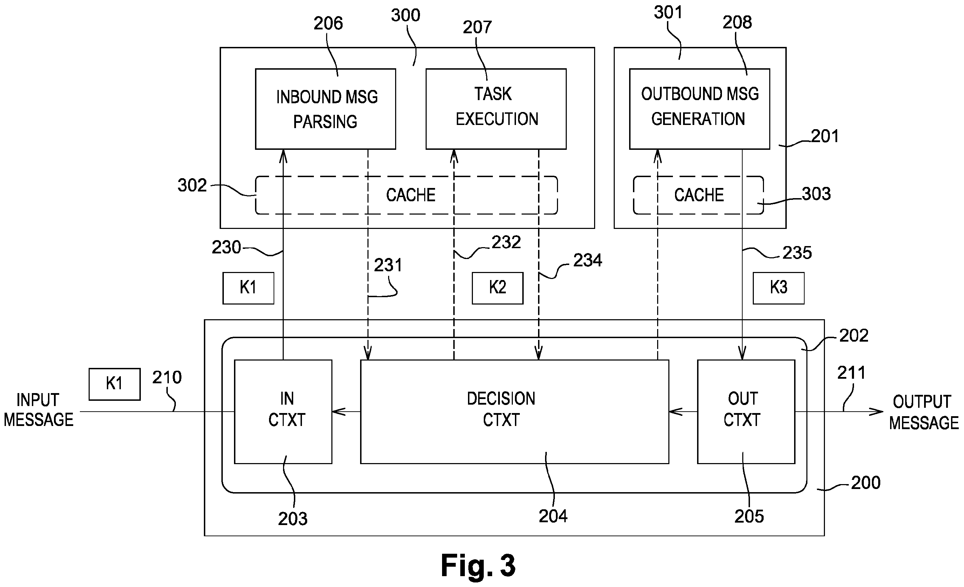

**Figure 3** is a schematic representation of a processing system comprising a host device and two secure elements cooperating for executing a program.

The same functions as those depicted with Figure 2 are implemented by the different devices of the processing system. A first secure element 300 manages the generation of inbound contexts as well as the task executions. A second secure element 301 manages the processing related to the outbound context generation and the host device 200 implements the same functions as those depicted with the previous figure. A difference is that the host device 200 is configured to exchange data with two distinct secure elements 300, 301. In particular, the host device 200 is able to send notifications for informing a secure elements that a given execution context is available for processing. Data required for executing the task associated to a given execution context are then downloaded by the first 300 or second 301 secure elements in their respective cache memory 302, 303.

What is underlined there is that a plurality of secure element can be used to execute a program. The program is in that case split into a plurality of subprograms called tasks, a task being adapted to be processed at least on one secure element of the processing system. Using a plurality of secure element presents many advantages. One of them is that the execution of a program can be pipelined. In that case, the different secure elements are responsible of executing one task of a workflow, and those tasks can be executed in parallel.

Another advantage is that the processing system allows to implement load balancing techniques between the secure elements. For example, is a given secure element is already busy by executing a given task, he will not be notified for executing a subsequent task. Instead, another secure element of the processing system which is not working can be notified and is free to execute the associated task.

It is also possible to design the secure elements of the system in order to efficiently execute a given task. For example, the secure element 301 will be designed to efficiently implement transcoding.

Thanks to this architecture, it is also possible to mix different types of secure elements providing different levels of security and allocate the most sensible tasks to the most secured secure elements. As an example, if a secure element comprises some very sensible code or keys, those will not be mixed with data contained in another secure element.

When several secure elements are used in parallel, the K2 key or key pair should be shared between them. The secure elements can be provisioned with the needed keys at the personalization phase or using well-known session key generation protocols.

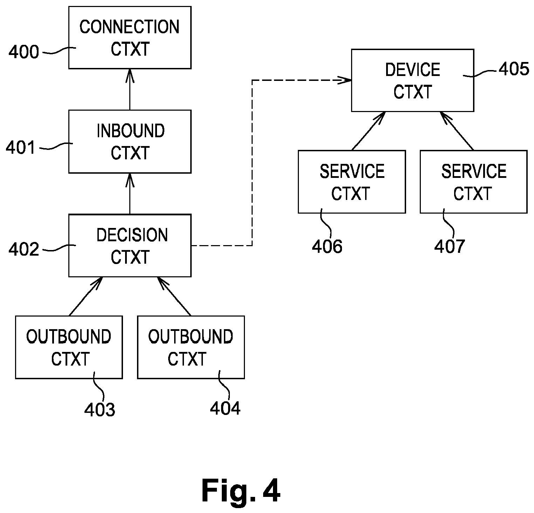

**Figure 4** provides an example of hierarchical organization that can be implemented for linking different types of execution contexts.

In this example, two outbound contexts 403, 404 are referring to a parent 402 which is a decision context. This is useful if some data in the outbound context is already stored within the decision context 402. In that case, it is not required to reproduce these data into a plurality of execution contexts, and only a reference to the target data in the parent execution context is memorized within the execution context with a lower hierarchical level.

In this example, the parent of the decision context 402 is the inbound context 401 which is liked to a parent designated as the connection context 400. A connection context corresponds for example to an execution context that is maintained in the memory managed by the host device for the whole duration of a communication connection established between the processing system and a remote communication system. Using this mechanism, the amount of memory required by the processing system is optimized as it is not required anymore to duplicate data in multiple execution contexts.

Other types of execution contexts can also be part of this hierarchical structure. For example execution contexts associated to a given service 406, 407 are linked to a parent which is a device context 405. The device context 405 is then linked to a decision context 402. It is reminded that an execution context can contain both enciphered and clear data. The hierarchical structure is particularly useful for data memorized in clear or execution contexts that are stored enciphered using the same ciphering key.

The life span of an execution context depends on their type. For example, an inbound context can be maintained until the message is fully processed, a service context can be maintained until the service disappear from the network and a connection context can be maintained until the connection with a device outside of the processing system is interrupted. When a parent execution context is removed, all the execution contexts with a lower hierarchical level are also removed.

In this description, various embodiments of a processing system have been described underlining the cooperation between a host device and a set of at least one secure element. However, the invention is not limited to the use of a secure element. For example, the invention is application of a system in which the secure elements are replaced by trusted execution environment (TEE). In other words, the invention is application to a processing system that is composed of a host device and one or several secure enclave. The secure enclave can be a removable or integrated secure element. Alternatively, the secure enclave can be a TEE.

## Claims

1. A processing device (100) adapted to cooperate with a secure enclave (101) for executing a program, the processing device (100) being configured to:
- receive (110) a message comprising input data;
- generate from these input data a first execution context (103), an execution context corresponding to a data structure (103) comprising at least data required for executing a task corresponding to a portion of the program, the first execution context (103) being memorized into a memory managed by the processing device (100);
- send a notification message (120) to the secure enclave (101) indicating that the first execution context (103) is available so that the secure enclave (101) is triggered to read the first execution context (103), to download (130) in its internal memory data of the first execution context (103) that is required for executing the associated task and to execute (131) said task.

2. A processing device (100) according to claim 1, configured to receive from the secure enclave (101) a second execution context (105) comprising at least a result produced by the execution on the task for memorizing it into the memory managed by said processing device.

3. A processing device (100) according to any of the preceding claims, wherein a software code or an executable file required for executing the task is memorized enciphered in a memory managed by the processing device, the software code or the executable file required for executing the task being provided by the processing device (100) to the secure enclave (101) at the time of executing said task.

4. A processing device (100) according to any of the preceding claims, wherein the memory managed by the processing device is a virtual memory operated by a memory management unit.

5. A processing device (100) according to any of the preceding claims, wherein the first execution context is placed in a queue (104) comprising a plurality of execution contexts in order to prioritize the generation of the notification messages (120).

6. A processing device (100) according to any of the preceding claims configured to cooperate with a secure enclave (101) which is a secure element.

7. A processing device (100) according to any of the preceding claims configured to cooperate with a secure enclave (101) which is a trusted execution environment.

8. A processing device (100) according to any of the preceding claims, adapted to receive from the secure enclave (101) and memorize in a virtual memory page an execution context generated by the execution of a task.

9. A processing device (100) according to any of the preceding claims, wherein the program to be executed is written in a bytecode split into a plurality of portion of said bytecode, a portion corresponding to a task executable by a virtual machine (VM) implemented by the secure enclave (101).

10. A secure enclave (101) adapted to cooperate with a processing device (100) according to any of the preceding claims, configured to:
- receive a notification message (120) from the processing device (101) indicating that a first execution context (103) is available, an execution context corresponding to an aggregation of data items that is required to execute a portion of the program called task;
- read the new execution context and download n a memory internal to the secure enclave (130) from a memory managed by the processing device (100) data contained in the first execution context (104) that is required for executing its associated task;
- execute (131) said task in order to generate a set of at least one result that is used to generate or update a second execution context;
- send the at least one result to the processing device (101) for it to be memorized in the memory managed by the processing device (200) in the form of a second execution context;
- clear the internal memory of the secure enclave (101) by removing data from the first execution context.

11. A secure enclave (101, 201) according to claim 10, wherein data contained in the first execution context is memorized in an enciphered form in the memory managed by the processing device (200), said data being deciphered (206) by the secure enclave (201) before memorizing it in its internal memory using a first ciphering key that is stored in the secure enclave.

12. A secure enclave (101, 201) according to any of claims 10 or 11, configured to encipher (206) data contained in the second execution context before sending it (321) to the processing device (200) using a second ciphering memorized in a memory internal to the secure enclave.

13. A secure enclave (101, 201) according to any of claims 10 to 12, wherein at least one of the first and second ciphering keys is a ciphering key enabling symmetric encryption.

14. A secure enclave (101, 201) according to any of claims 10 to 13, wherein at least one of the first and second ciphering key is a private key of a key pair comprising a private and a public key enabling ciphering key enabling public-key encryption.

15. A secure enclave (101, 201) according to claim which is a secure element.

16. A secure enclave (101, 201) according to claim which is a trusted execution environment.
